# EUROPÄISCHE PATENTSCHRIFT

(11) **EP 0 704 729 B1**
(45) Veröffentlichungstag und Bekanntmachung des Hinweises auf die Patenterteilung: **12.08.1998**
(21) Anmeldenummer: 94118889.8
(22) Anmeldetag: 30.11.1994
(51) Int. Cl.: G02B 6/38

(54) **Lichtwellenleiter-Kabel**
Light wave guide cable
Câble à guides d'ondes optiques

(30) Priorität: 27.09.1994 DE 9415713 U
(43) Veröffentlichungstag der Anmeldung: 03.04.1996
(73) Patentinhaber: Dätwyler GmbH Kabel und Systeme, 85375 Neufahrn (DE); EUROMICRON GmbH, D-35756 Mittenaar (DE)
(72) Erfinder: Klees,Ernst, D-80939 München (DE)
(74) Vertreter: Turi, Michael, Dipl.-Phys.

(56) Entgegenhaltungen:
- EP-A- 0 201 748
- EP-A- 0 233 805
- EP-A- 0 293 183
- EP-A- 0 375 168
- DE-A- 2 461 794
- DE-A- 2 733 100
- DE-A- 2 835 657
- US-A- 4 203 650
- US-A- 5 117 475
- PATENT ABSTRACTS OF JAPAN vol. 9 no. 190 (P-378) [1913] 7.August 1985 & JP-A-60 057807 (NISSAN) 1.März 1994
- PATENT ABSTRACTS OF JAPAN Bd. 5, Nr. 73 (P-61) 745 15 Mai 1981 & JP-A-56 022 403 (MATSUSHITA) 03 M rz 1981
- PATENT ABSTRACTS OF JAPAN Bd. 5, Nr. 92 (P-66) 764 16 Juni 1981 & JP-A-56 038 004 (N.D.D.K) 13 April 1981

## Beschreibung

Die Erfindung betrifft ein Lichtwellenleiter-Kabel gemäß dem Oberbegriff des Anspruchs 1.

Lichtwellenleiter-Kabel werden in den verschiedensten Gebieten, insbesondere zur Datenübertragung eingesetzt, so z.B. für öffentliche und private Telefonverbindungen, für EDV-Datennetze, für Fernseh- und Videobildübertragungsanlagen, z.B. in Straßentunnels und Gebäuden, für EW-Netze, usw.. Meist bestehen derartige Lichtwellenleiterkabel (LWL-Kabel) aus mehr als einem Lichtwellenleiter und werden jeweils von Kevlarfasern und zusätzlich von einem Außenmantel umhüllt. Die Kevlarfasern dienen dabei vorwiegend zur Zugentlastung, wohingegen dem Außenmantel eine Schutzfunktion gegen äußere Einflüsse zukommt. Jeder Lichtwellenleiter setzt sich aus einem zylindrischen Kern und einem Mantel zusammen, welcher den Kern konzentrisch umschließt. Als Kern Mantel-Materialien kommen z.B. Kombinationen aus Glas/Glas, Glas/Kunststoff, Kunststoff/Kunststoff in Frage. Während der Lichtwellenleiter der letztgenannten Materialkombination, also ein Vollkunststoff-Lichtwellenleiter, sich nur für Datenübertragung im kurzen Distanzbereich, z.B. in Fahrzeugen, eignet, kommen für lange Distanzen, z.B. für die öffentlichen Telekommunikationsnetze, nur Lichtwellenleiter in Frage, bei denen sowohl der Kern als auch der Mantel aus hochreinem Quarzglas besteht.

In der Praxis haben sich unter anderem zwei Arten von LWL-Kabeln durchgesetzt:

In einem Fall wird das LWL-Kabel in einen - in einer Wand, am Boden, etc. vorgesehenen - Kabelkanal eingezogen. Anschließend werden die mit einer Anschlußgerät-Buchse verbindbaren Stecker, etwa Standardstecker oder Duplexstecker, am Ende des jeweiligen Lichtwellenleiters aufgebracht bzw. dort aufkonfektioniert: Hierfür wird zuerst der Außenmantel und die Kevlarfasern des jeweiligen LWL-Kabels abisoliert und der ausgewählte Stecker mit dem Lichtwellenleiter verspleißt. Dieser Vorgang ist sehr aufwendig, da hierfür spezielle Spleißgeräte notwendig sind. Zudem ist das Verspleißen, das meist am Montageort stattfindet, problematisch, da eine Spleißverbindung zwischen Lichtwellenleiter und Adapter nur dann dauerhaft haltbar ist, wenn sie in verhältnismäßig schmutz- und staubfreier "Atmosphäre" durchgeführt wird. Am Montageort ist diese Atmosphäre jedoch seltenst unter diesen Randbedingungen erzielbar.

Alternativ ist bekannt, die LWL-Kabel bei ihrer Herstellung in verschiedenen Längenabmessungen zu fertigen und bereits bei der Herstellung mit Steckern zu verspleißen. Derartige Montage-Einheiten, bestehend aus Lichtwellenleiter und Stecker müssen zwar am Montageort nicht mehr verspleißt werden, jedoch sind diese Montage-Einheiten in herkömmliche Kabelkanäle nur bedingt einziehbar. Die Enden eines solchen Lichtwellenleiters mit vor- bzw. aufkonfektionierten Stekkern haben einen großen Durchmesser, welcher sogar den Durchmesser des Kabelkanals übersteigen kann. Derartige Verhältnisse liegen insbesondere bei LWL-Kabeln mit zwei und mehr Lichtwellenleitern vor. Folglich können derartige vorkonfektionierte Montage-Einheiten oftmals nicht in unterirdische Kabelkanäle eingezogen werden, sondern müssen extern, z.B. an einer Gebäudewand, verlegt werden.

Zudem müssen derartige Montage-Einheiten in ihrer Länge bereits bei der Fertigung der zu verlegenden Strecke angepaßt werden.

Ein gattungsgemäßes Lichtwellenleiter-Kabel ist z.B. in der EP-A-375 168 beschrieben. Zur exakten parallelen Ausrichtung der Adapter in Längsrichtung des Kabels sind diese zusätzlich leicht verschwenkbar.

Das in der EP-A-233 805 beschriebene Lichtwellenleiter-Kabel weist eine Umhüllung auf, wobei zwischen der Umhüllung und dem Kabel faserartige Verstärkungselemente angeordnet sind.

Die EP-A-293 183 offenbart eine Verteilertafel für Lichtwellenleiter. Die Lichtwellenleiter weisen an ihren Enden Adapter auf, wobei die Adapter benachbarter Lichtwellenleiter in Lichtwellenleiter-Längsrichtung versetzt angeordnet sind.

Nach dem Stand der Technik sind auch Steckeradapter bzw. Adapter für Stecker bekannt, die ein meist lösbares Verbindungstück zwischen einzelnen Lichtwellenleitern und einem externen Stecker bilden. Solche Adapter werden bereits vor der Endmontage auf die Enden einzelner Lichtwellenleiter eines LWL-Kabels konfektioniert. Trotzdem treten z.B. bei nachträglichem Einziehen eines mit derartigen Adaptern bestückten LWL-Kabels in einen mit bereits mehreren LWL-Kabeln ausgefüllten Kabelkanal aufgrund des noch erheblichen Kabeldurchmessers Probleme auf.

Die Erfindung möchte hier Abhilfe schaffen.

Die Erfindung erreicht dieses Ziel durch ein Lichtwellenleiter-Kabel gemäß Anspruch 1. Weitere vorteilhafte Ausführungen der Erfindung sind in den abhängigen Ansprüchen beschrieben. Danach sind die Adapter benachbarter Lichtwellenleiter zueinander versetzt angeordnet. Ferner sind die senkrecht zur Kabel längsrichtung ausgebildeten Ober-bzw. Begrenzungsflächen benachbarter Adapter in unterschiedlichen, parallelen Ebenen angeordnet. Beispielsweise sind benachbarte Adapter eines LWL-Kabelendes in Kabellängsrichtung oder in Kabel längsrichtung - mindestens um die komplette Länge eines Adapters - und quer dazu versetzt.

Die erfindungsgmäßen Adapter sind je nach Anwendung mit unterschiedlichen Steckertypen, z.B. Anschlüsse für Patch-oder Verbindungskabel, bevorzugt nach dem Baukastenprinzip verbindbar. Hierdurch wird ein flexibles LWL-Verbindungsmodul für den externen Anschluß geschaffen. Vorzugsweise sind die Adapter mit einem Durchmesser von max. 3 mm ausgebildet, also mit einem erheblich geringeren Durchmesser als herkömmliche Stecker (Anspruch 2).

Durch die Kombination der versetzten Anordnung der Adapter benachbarter Lichtwellenleiter einerseits und die obige Bemessung der Adapter im Durchmesser andererseits wird eine erhebliche Reduzierung des Durchmesser am Anschlußende des LWL-Kabels im Vergleich zu bekannten LWL-Kabeln erzielt. Das erfindungsgemäße konfektionierte LWL-Kabel mit versetzten Adaptern der vorstehenden Art hat am Kabelende je nach Anzahl der Lichtwellenleiter einen Durchmesser von max. 25 mmm, also einen erheblich geringeren Durchmesser als bekannte LWL-Kabel mit vorkonfektionierten Steckern. Folglich kann die erfindungsgemäße Montage-Einheit aus Lichtwellenleitern mit Adaptern auch in externe, dünne Kabelkanäle eingezogen werden, welche z.B. nur eine geringfügig größere Querschnittsfläche als das LWL-Kabel ohne Adapter haben.

In einer bevorzugten Weiterbildung des erfindungsgemäßen Lichtwellenleiterkabels sind die Adapter benachbarter Lichtwellenleiter um mindestens einen - der Ausdehnung eines Adapters in Längsrichtung des Kabels entsprechenden - Betrag versetzt angeordnet (Anspruch 3). Hierdurch wird eine weitere Verringerung der Querschnittsfläche des LWL-Kabelendes erzielt, da nicht alle an einem LWL-Kabelende befindlichen Adapter einen Beitrag zur Querschnittsfläche des LWL-Kabelendes insgesamt liefern. Einen Beitrag liefern nur diejenigen, welche in einer gemeinsamen Schnittebene senkrecht zur Kabellängsrichtung angeordnet sind.

Um eine weitere Optimierung in Richtung minimalem Raumbedarf der Lichtwellenleiter-Kabelenden zu erzielen, reihen sich die versetzten Adapter mehrerer Lichtwellenleiter aneinander (Anspruch 4). Folglich tragen bei einem LWL-Kabel mit mehreren Lichtwellenleitern höchstens zwei Adapter, genauer deren Querschnittsflächen, zum maximalem LWL-Kabelquerschnitt bei.

Erfindungsgemäß sind die Adapter benachbarter Lichtwellenleiter quer zur Kabel(längs)richtung zueinander versetzt angeordnet. Durch die Versetzung benachbarter Adapter in Querrichtung trägt lediglich ein Teil der Querschnittsfläche der an einem Kabelende angeordneten Adapter, bezogen auf die Kabellängsrichtung, zum LWL-Kabelquerschnitt bei.

Da neben der Anordnung der Adapter an den Enden der Lichtwellenleiter auch ihre Form eine wesentliche Rolle für die Querschnittsausdehnung des LWL-Kabels spielt, haben die Adapter einen gekrümmten, insbesondere runden Querschnitt (Anspruch 5).

Die Adapter dienen nach dem Verlegen eines LWL-Kabels als Bindeglied zwischen den einzelnen Lichtwellenleitern und einem zugeordneten Stecker und nehmen auch die Zugkräfte zwischen den Lichtwellenleitern und den Steckern auf. Hierfür sind die Adapter vorteilhafterweise mit den Lichtwellenleitern fest verbunden, insbesondere damit verklebt und/oder darauf unter Preßpassung aufgesetzt (Anspruch 6).

Gegenwärtig werden für unterschiedliche Geräte und unterschiedliche Übertragungsarten unterschiedliche Stecker verwendet werden. Es bedeutet jedoch einen hohen Herstellungsaufwand für jeden Stecker einen entsprechenden Adapter vorzusehen. Die Erfindung schafft hier insofern Abhilfe, als der Adapter so ausgelegt ist, daß er mit unterschiedlichen Lichtwellenleiter-Steckern modulartig verbindbar ist (Anspruch 7).

In der Praxis haben sich als Lichtwellenleiter-Stecker die Standard-, Duplex-, Hybrid-, St- oder SC-Stecker durchgesetzt (Anspruch 8). Diese werden auch vorteilhaft in der Erfindung eingesetzt.

In einer bevorzugten Ausgestaltung des erfindungsgemäßen Lichtwellenleiter-Kabels ist ein Kabelstützelement, vorzugsweise aus GFK, zwischen den Lichtwellenleitern eines Kabels angeordnet, insbesondere entlang dessen zentrischer Achse (Anspruch 9). Dieses Kabelstützelement verhindert ein Abknicken und somit eine Beschädigung der einzelnen Lichtwellenleiter. Die Lichtwellenleiter dürfen nur bis zu einem bestimmten Grad gekrümmt werden, um dennoch eine adäquate Signal- bzw. definierte Lichtwellenausbreitung zu gewährleisten.

Vorteilhafterweise sind die Lichtwellenleiter samt Adapter von einer Aramidgarnarmierung, insbesondere Kevlar, und einem Außenmantel, insbesondere aus Kunststoff, z.B. PE, umgeben (Anspruch 10). Hierdurch wird einerseits eine Zugentlastung der Lichtwellenleiter durch die Aramidgarnarmierung sichergestellt und andererseits auch ein Schutz vor äußeren Einflüssen durch den Außenmantel ausgebildet. Zudem können derartig umgebene Lichtwellenleiter mit Adaptern in herkömmlichen Kabelkanälen eingezogen werden. Nach dem Einziehen müssen lediglich die Kabelenden abisoliert und die Adapter mit den herkömmlichen Steckern, wie etwa Standard-oder Duplexsteckern, verbunden werden.

Die Erfindung wird nun anhand eines Ausführungsbeispiels und der beigefügten schematischen Zeichnung näher erläutert. In der Zeichnung zeigen:
- Fig. 1: ein Ausführungsbeispiel eines Lichtwellenleiters mit Adapter;
- Fig. 2: eine schematische Seitenansicht eines Ausführungsbeispiels mit vier Lichtwellenleitern mit Adaptern;
- Fig. 3: eine Draufsicht von Fig. 2;
- Fig. 4: eine schematische Seitenansicht eines zweiten Ausführungsbeispiels mit vier Lichtwellenleitern mit Adaptern; und
- Fig. 5: eine Draufsicht von Fig. 4.

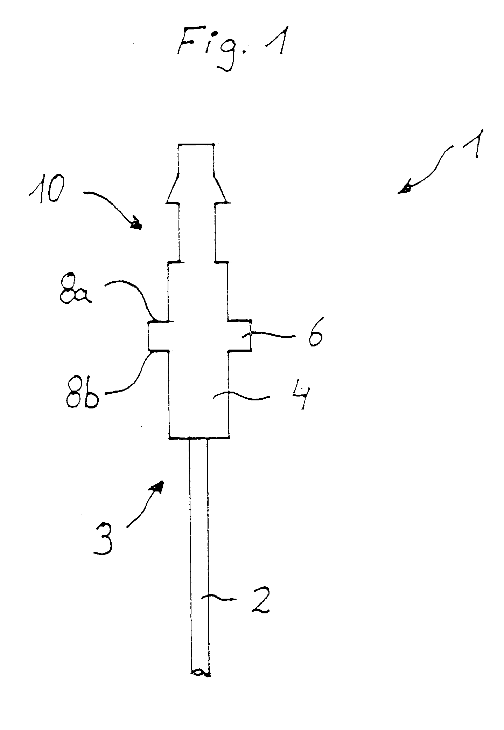

Gemäß Fig. 1 ist ein Lichtwellenleiter 2 mit seinem einen Ende 3 in einen Adapter 4 eingefügt bzw. mit diesem verspleißt, z.B. über ein einfaches Stecker-Kupplungs-System, und sitzt auf einem Ende eines LWL-Kabels 1. Der Adapter 4 ist im wesentlichen zylinderförmig mit einem Durchmesser von ca. 3 mmm und einer Länge von ca. 12 mm ausgebildet und weist an seiner Oberfläche einen Umfangsring 6 auf, dessen Oberflächen 8a und 8b als Anlageflächen für einen zweigeteilten Stecker, etwa einem Standardstecker, dienen.

Die nicht dargestellten Stecker bestehen im allgemeinen aus einem Steckergesicht, in dessen eines Ende das Oberteil 10 des Adapters einfügbar ist, und aus einer Überwurfmutter mit Schlitz, welche an der Unterseite des Steckergesichts verschraubbar ist. In zusammengebautem Zustand liegt der Umfangsring 6 mit seiner Oberfläche 8a an der Unterseite des Steckergesichts auf und die Überwurfmutter verspannt durch Schraubbewegung den Adapter im Sitz an der Unterseite des Steckergesichts, wobei die Überwurfmutter hierfür an der unteren Umfangsfläche 8b des Umfangsrings 6 angreift.

Bezugnehmend auf die Figuren 2-5 werden nachfolgend zwei Beispiele für die Versetzung von vier Lichtwellenleitern mit aufgespleißten Adaptern eines LWL-Kabels und die resultierende Verringerung der "maximalen" Querschnittsfläche eines LWL-Kabels aufgezeigt.

In Fig. 2 ist eine schematische Seitenansicht des erster Ausführungsbeispiels von vier Lichtwellenleitern 2 mit jeweiligen Adaptern 4a-4d dargestellt. Wie dieser Figur zu entnehmen ist, befinden sich die vier Lichtwellenleiterenden mit Adaptern 4a, 4b, 4c und 4d in drei unterschiedlichen Adapterebenen, d.h. der Versatz zwischen zwei Adapterebenen entspricht einer Adapterlänge. Zuoberst ist der Adapter 4a angeordnet, an dessen Unterseite sich die beiden Adapter 4b und 4c anschließen, unterhalb denen sich der Adapter 4d befindet. Die Adapter 4b, 4c und 4d sind nicht nur in Kabel längsrichtung zum Adapter 4a versetzt, sondern auch quer zu dieser Richtung, wie Fig. 2 und 3 zu entnehmen ist. Das heißt, die Adapter 4b und 4c sind unter dem Adapter 4a angeordnet und berühren den im Adapter 4a zentrisch angeordneten Lichtwellenleiter 2. Hierdurch ergeben sich in Draufsicht des Ausführungsbeispiels (Fig. 3) Überlappungs-bzw. Deckungsflächen sowohl zwischen dem Adapter 4a und dem Adapter 4b als auch zwischen den Adapter 4a und 4c. Durch die Anordnung des Adapters 4d unter den beiden Adaptern 4b und 4c entsteht zwischen den Adaptern 4d und 4a eine zusätzliche Überlappungsfläche. Die Überlappungsflächen sind in Fig. 3 schraffiert dargestellt. Würde man die vier Adapter 4a - 4d nebeneinander anordnen, so würde sich im Vergleich zur Adapter-Anordnung des Ausführungsbeispiels der Fig. 2 und Fig. 3 eine Vergrößerung der LWL-Kabelquerschnittfläche - im Bereich der Adapter - um das Zweifache der Summe der Überlappungsflächen ergeben.

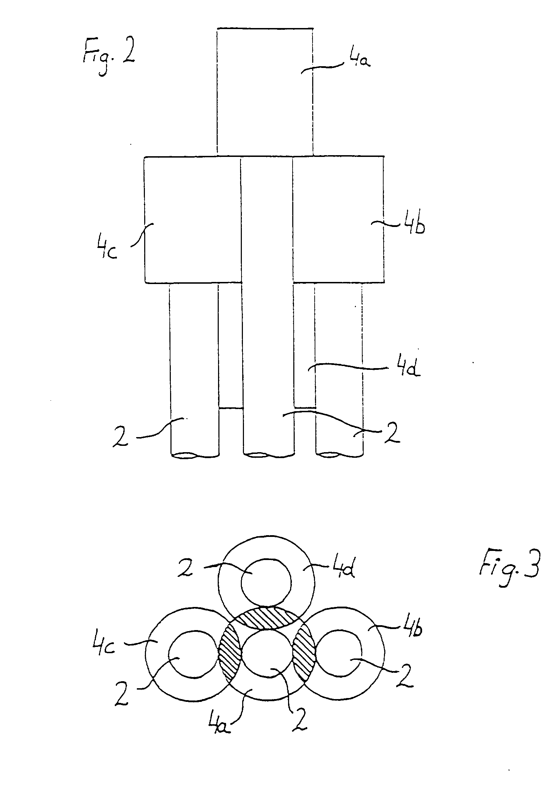

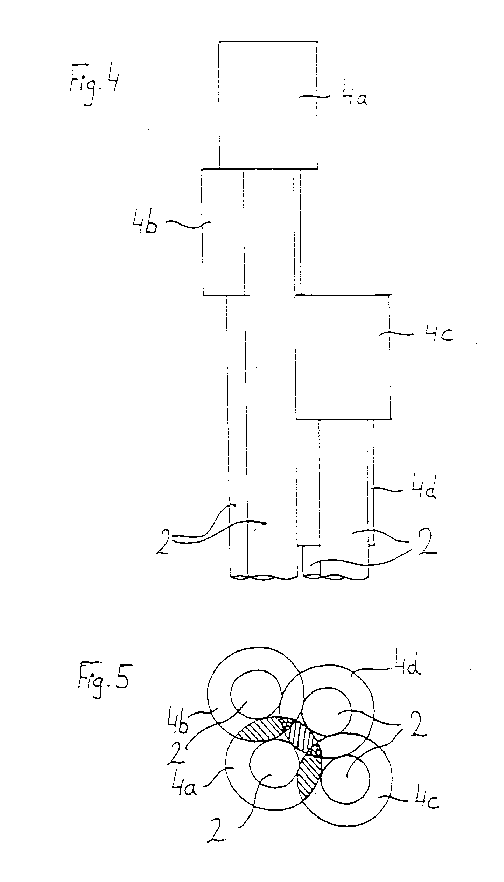

In den Figuren 4 und 5 ist eine alternative Anordnung der vier Lichtwellenleiter mit Adapter dargestellt. Diese alternative Anordnung zeigt eine weitere Verringerung der maximalen Kabelquerschnittsfläche, verglichen mit dem ersten Ausführungsbeispiel. Gemäß Fig. 4 sind die Adapter 4a bis 4d um die Länge eines Adapters versetzt, in einer Reihe untereinander angeordnet. Es ergeben sich bei dieser Anordnung im Vergleich zu Fig. 4 vier Adapterebenen. Wie in Fig. 5 dargestellt, sind die Adapter 4a, 4b und 4c in Draufsicht derart angeordnet, daß die Adapter 4b und 4c wiederum den Lichtwellenleiter 2 des Adapters 4a berühren. Diese zweite Adapter-Anordnung (Fig. 4 und 5) unterscheidet sich jedoch von der Adapter-Anordnung des ersten Ausführungsbeispiels dadurch, daß eine imaginäre Verbindungslinie zwischen den Lichtwellenleiter-Einführbereichen jedes Adapters 4a, 4b und 4c ein gleichschenkliges Dreieck aufspannt. Beim ersten Ausführungsbeispiel würde eine analoge Verbindungslinie eine Gerade bilden.

Unterhalb der drei Adapter 4a, 4b und 4c ist der Adapter 4d derart angeordnet, daß er die drei Lichtwellenleiter 2 der drei Adapter 4a, 4b und 4c berührt. Durch diese spezielle Anordnung der vier Adapter 4a-4d wird eine größere "Gesamtüberlappungsfläche" - schraffierte Flächen in Fig. 5 - erzielt, verglichen zur Anordnung der Fig. 2 und 3. Folglich ist auch die maximale Querschnittsfläche des LWL-Kabels 1 mit Adaptern 4a-4d gemäß Fig. 5 kleiner als die des LWL-Kabels 1 gemäß Fig. 3.

Es ist ersichtlich, daß weitere Anordnungsmodifikationen der vier Lichtwellenleiter mit Adaptern möglich sind. Auch können die Adapter per se eine andere Form aufweisen, d.h. sie müssen keine zylindrische Gestalt haben.

Obwohl die Lichtwellenleiter mit Adapter der Fig. 2-5 ohne ein Stützelement, ohne Aramidgarnarmierung und Außenmantel dargestellt sind, sind in der Praxis die Lichtwellenleiter-kabel mit diesen und weiteren Kabelkomponenten ausgestattet.

Beim Einsatz eines erfindungsgemäßen Lichtwellenleiterkabels 1 vor Ort muß nach dem Einziehen des Kabels 1 lediglich der Außenmantel und die Aramidgarnarmierung abisoliert und die jeweiligen Stecker - Standardstecker, Duplexstecker, usw. - mit einem Adapter verbunden werden.

Bei der Wahl der Kabellänge ist sowohl die zu verlegende Kabellänge als auch die aus dem Adapterversatz resultierende Länge des kürzesten Lichtwellenleiters eines Kabels zu berücksichtigen.

Die beiden Ausführungsbeispiele mit vier Adaptern dienen lediglich zur Veranschaulichung der vielfältigen Möglichkeiten bei der Anordnung und Versetzung von Adaptern eines Lichtwellenleiterkabelendes. Sie beschränken sich auf vier Lichtwellenleiter mit Adaptern, wohingegen handelsübliche Lichtwellenleiterkabel zwischen einem und zwölf Lichtwellenleiter pro Kabel aufweisen. Eine Übertragung des in den beiden Ausführungsbeispielen dargestellten Anordnungsprinzips der Adapter eines Lichtwellenleiterkabels mit mehr oder weniger einzelnen Lichtwellenleitern ist analog möglich.

## Patentansprüche

1. Lichtwellenleiter-Kabel (1) mit mindestens zwei Lichtwellenleitern (2), wobei die Lichtwellenleiter (2) an wenigstens einem Kabelende je einen Adapter (4) für eine Steckverbindung bzw. einen Stekker aufweisen, und die Adapter (4) in Querrichtung des Kabels (1) versetzt angeordnet sind, dadurch gekennzeichnet, daß die Adapter (4) auch in Längsrichtung des Kabels (1) versetzt sind und derart angeordnet sind, daß sich die Querschnittsflächen der Adapter, wenn das gestreckte Kabel in Längsrichtung betrachtet wird, zumindest teilweise überlappen.

2. Lichtwellenleiter-Kabel nach Anspruch 1, dadurch gekennzeichnet, daß die Adapter (4) mit einem Durchmesser von max. 3 mm ausgebildet sind.

3. Lichtwellenleiter-Kabel nach Anspruch 1 oder 2, dadurch gekennzeichnet, daß die Adapter benachbarter Lichtwellenleiter (2) um mindestens einen - der Ausdehnung eines Adapters in Längsrichtung des Kabels (1) entsprechenden - Betrag versetzt angeordnet sind.

4. Lichtwellenleiter-Kabel nach einem der vorstehenden Ansprüche, dadurch gekennzeichnet, daß sich die versetzten Adapter (4) mehrerer Lichtwellenleiter (2) aneinander reihen.

5. Lichtwellenleiter-Kabel nach einem der vorstehenden Ansprüche, dadurch gekennzeichnet, daß die Adapter (4) einen gekrümmten, insbesondere runden Querschnitt aufweisen.

6. Lichtwellenleiter-Kabel nach einem der vorstehenden Ansprüche, dadurch gekennzeichnet, daß die Adapter (4) mit den Lichtwellenleitern (2) fest verbunden, insbesondere damit verklebt und/oder darauf unter Preßpassung aufgesetzt sind.

7. Lichtwellenleiter-Kabel nach einem der vorstehenden Ansprüche, dadurch gekennzeichnet, daß die Adapter (4) mit unterschiedlichen Lichtwellenleiter-Steckern verbindbar sind.

8. Lichtwellenleiter-Kabel nach Anspruch 7, dadurch gekennzeichnet, daß die Adapter (4) für Standard-, Duplex-, Hybrid-, ST- oder SC-Lichtwellenleiter-Stecker ausgelegt sind.

9. Lichtwellenleiter-Kabel nach einem der vorstehenden Ansprüche, dadurch gekennzeichnet, daß ein Kabelstützelement, vorzugsweise aus GFK, zwischen den Lichtwellenleitern (2) eines Lichtwellenleiter-Kabels (1) angeordnet wird, insbesondere entlang dessen zentrischer Achse.

10. Lichtwellenleiter-Kabel nach einem der Ansprüche 1 bis 8, dadurch gekennzeichnet, daß die Lichtwellenleiter (2) samt Adapter (4) von einer Aramidgarnarmierung, insbesondere Kevlar, und einem Außenmantel, insbesondere Kunststoff, z.B. PE, umgeben sind.

## Claims

1. An optical fibre cable (1) having at least two optical waveguides (2), with the optical waveguides (2) each having an adapter (4) for a plug-in connection or a plug at least one cable end, and the adapters (4) being disposed offset in the transversal direction of the cable (1),
**characterised in that** the adapters (4) are also offset in the longitudinal direction of the cable (1) and are disposed so that the cross-sectional faces of the adapters at least partially overlap when the stretched cable is studied in the longitudinal direction.

2. An optical fibre cable according to Claim 1,
**characterised in that** the adapters (4) are constructed with a maximum diameter of 3 mm.

3. An optical fibre cable according to Claim 1 or 2,
**characterised in that** the adapters of adjacent optical waveguides (2) are disposed offset by at least an amount which corresponds to the extension of an adapter in the longitudinal direction of the cable (1).

4. An optical fibre cable according to one of the preceding Claims,
**characterised in that** the offset adapters (4) of several optical waveguides (2) are in a row.

5. An optical fibre cable according to one of the preceding Claims,
**characterised in that** the adapters (4) have a curved, in particular a round, cross section.

6. An optical fibre cable according to one of the preceding Claims,
**characterised in that** the adapters (4) are securely connected to the optical waveguides (2), in particular are bonded therewith and/or are placed thereon with force fit.

7. An optical fibre cable according to one of the preceding Claims,
**characterised in that** the adapters (4) can be connected with various optical waveguide plugs.

8. An optical fibre cable according to Claim 7,
**characterised in that** the adapters (4) are designed for standard, duplex, hybrid, ST or SC optical waveguide plugs.

9. An optical fibre cable according to one of the preceding claims,
**characterised in that** a cable support element, preferably made from glass fibre reinforced plastic, is disposed between the optical waveguides (2) of an optical fibre cable (1), in particular along its central axis.

10. An optical fibre cable according to one of Claims 1 to 8,
**characterised in that** the optical waveguides (2) together with adapters (4) are surrounded by an aramide fibre reinforcement, in particular kevlar, and an outer casing, particular plastics, e.g. PE.

## Revendications

1. Câble à guides d'ondes optiques (1) muni de deux guides d'ondes optiques (2) au moins, dans lequel les guides d'ondes optiques (2) présentent en une extrémité de câble (4) chacun au moins un adaptateur pour réaliser une liaison à l'aide d'un connecteur pour fiche mâle ou d'une fiche mâle, les adaptateurs (4) étant arrangés en étant décalés dans le sens transversal du câble, caractérisé en ce que, les adaptateurs (4) sont également décalés dans le sens longitudinal du câble (1) et sont arrangés de manière telle que, lorsque l'on regarde le câble enfiché dans la direction de la longueur, les sections droites des adaptateurs se recouvrent au moins de manière partielle.

2. Câble à guides d'ondes optiques conforme à la revendication 1, caractérisé en ce que, les adaptateurs (4) sont fournis avec un diamètre de 3 mm au maximum.

3. Câble à guides d'ondes optiques conforme à la revendication 1 ou à la revendication 2, caractérisé en ce que, les adaptateurs contigus des guides d'ondes optiques (2) sont arrangés de manière à être espacés d'au moins une distance comprenant la dimension d'un adaptateur dans la direction de la longueur du câble (1).

4. Câble à guides d'ondes optiques conforme à l'une des revendications précédentes, caractérisé en ce que, les adaptateurs décalés (4) de plusieurs guides d'ondes optiques (2) sont contigus les uns aux autres.

5. Câble à guides d'ondes optiques conforme à l'une des revendications précédentes, caractérisé en ce que, les adaptateurs (4) présentent une section droite incurvée, en particulier ronde.

6. Câble à guides d'ondes optiques conforme à l'une des revendications précédentes, caractérisé en ce que, les adaptateurs (4) sont reliés de manière fixe aux guides d'ondes optiques (2), et pour ceci sont en particulier collés et/ou assemblés au moyen d'un ajustage serré.

7. Câble à guides d'ondes optiques conforme à l'une des revendications précédentes, caractérisé en ce que, les adaptateurs (4) peuvent être reliés à diverses fiches de guide d'ondes optiques.

8. Câble à guides d'ondes optiques conforme à la revendication 7, caractérisé en ce que, les adaptateurs (4) sont fournis pour des fiches du genre standard, duplex, hybride, ST ou SC pour guide d'ondes optiques.

9. Câble à guides d'ondes optiques conforme à l'une des revendications précédentes, caractérisé en ce que, un élément de protection du câble, de préférence en matière plastique armée de fibre de verre, est arrangé entre les guides d'ondes optiques (2) d'un câble à guides d'ondes optiques (1), en particulier le long de l'axe central de celui-ci.

10. Câble à guides d'ondes optiques conforme à l'une des revendications 1 à 8, caractérisé en ce que, les guides d'ondes optiques (2) ainsi que les adaptateurs (4) sont entourés de fils armés d'un aramide, en particulier de kevlar, et d'un revêtement externe, en particulier de plastique, par exemple, de polyéthylène.
